# EUROPÄISCHE PATENTSCHRIFT

(11) **EP 1 700 059 B1**
(45) Veröffentlichungstag und Bekanntmachung des Hinweises auf die Patenterteilung: **25.05.2011**
(21) Anmeldenummer: 05701423.5
(22) Anmeldetag: 03.01.2005
(51) Int. Cl.: F16L 13/14

(54) **ROHRPRESSKUPPLUNG**
COMPRESSION PIPE COUPLING
RACCORD A COMPRESSION POUR TUBE OU TUYAU

(30) Priorität: 02.01.2004 DE 102004001056
(43) Veröffentlichungstag der Anmeldung: 13.09.2006
(73) Patentinhaber: Reckzeh, Manfred, 63457 Hanau (DE); Reckzeh, Thomas, 63457 Hanau (DE)
(72) Erfinder: Reckzeh, Manfred, 63457 Hanau (DE); Reckzeh, Thomas, 63457 Hanau (DE)
(74) Vertreter: Bonsmann, Joachim Bernhard
(86) Internationale Anmeldenummer: PCT/EP2005/050007
(87) Internationale Veröffentlichungsnummer: WO 2005/066533

(56) Entgegenhaltungen:
- DE-A1- 10 021 306
- DE-A1- 10 207 201
- DE-C1- 19 856 523
- US-A- 4 482 174
- US-B1- 6 450 553

## Beschreibung

Die Erfindung betrifft einen Stützkörper für eine Rohrpresskupplung sowie eine einen derartigen Stützkörper aufweisende Rohrpresskupplung. Ferner betrifft die Erfindung ein Verfahren zur Herstellung eines Stützkörpers für eine derartige Rohrpresskupplung.

Rohrpresskupplungen dienen dazu, ein Rohr aus Metall oder Kunststoff mit einem weiteren Bauteil wie beispielsweise einem anderen Rohr dichtend zu verbinden. Bei Rohrpresskupplungen gemäß der EP 0 848 200 A2 wird dabei eine Stützhülse innen in das betreffende Rohrende eingeführt und von außen ein Stützkörper (auch Quetschhülse genannt) über das Rohrende geschoben. Über die gesamte Anordnung wird dann unter Druck eine Überwurf-Presshülse aufgezogen, um eine feste Verbindung herzustellen.

Des Weiteren sind auch Rohrpresskupplungen entwickelt worden, die ohne eine innere Stützhülse auszukommen versuchen. Solche Systeme haben den Vorteil, dass der Rohrdurchmesser im Bereich der Kupplung nicht verkleinert wird, und dass diese für Rohre mit unterschiedlicher Materialstärke aber gleichem Außendurchmesser verwendet werden können. Ferner ist die Anzahl der für die Verpressung benötigten Teile geringer. Außerdem wird die bei innen liegenden Stützhülsen häufig auftretende Spaltkorrosion vermieden. Nachteilig bei den bekannten Systemen dieser Art ist jedoch, dass diese Systeme verhältnismäßig aufwändig in der Herstellung und damit teuer sind, und dass das Rohr im Bereich der Rohrpresskupplung erheblich deformiert wird. Durch die hohen Verpressungskräfte werden weiterhin teure und aufwändige Spezialwerkzeuge erforderlich. Durch die bei bekannten Rohrpresskupplungen auftretende Deformierung des Rohres ist der Einsatz von Rohrpresskupplungen ohne innere Stützhülse bislang auf relativ stabile Rohre mit großen Wandstärken beschränkt.

Aus der DE 198 56 523 C1 ist eine Rohrpresskupplung bekannt, bei der ein Stützkörper innenseitig eine Profilierung mit einer Mehrzahl von Haupt- und Stützzähnen aufweist. Die entsprechende Verpressung ist jedoch ungeachtet der hohen Anzahl von Zähnen, die relativ hohe Verpressungskräfte erforderlich machen, für dünnwandigere Rohre nicht geeignet (vgl. Fig. 10 des o.g. Dokuments). Derartige dünnwandige Rohre werden jedoch im Installationsbereich sehr häufig verwendet, wobei die Tendenz zur Verwendung immer dünnwandigerer Rohre geht.

Aus der US 4 482 174 ist eine Rohrpresskupplung mit einer Stützhülse mit einem sägezahnartigen Profil bekannt.

Aus der DE 100 21 306 A1 ist eine Rohrpresskupplung mit einer Stützhülse bekannt, die ein Profil mit einer Mehrzahl von Haupt- und Stützzähnen aufweist.

Vor diesem Hintergrund war es eine Aufgabe der vorliegenden Erfindung, eine universell einsetzbare und auch bei dünnwandigeren Rohren zuverlässig abdichtende Rohrpresskupplung ohne die Notwendigkeit des Einsatzes einer inneren Stützhülse bereitzustellen, die kostengünstig herzustellen und mit geringen Verpresskräften mit auf dem Markt vorhandenen Werkzeugen zu montieren ist.

Diese Aufgabe wird durch einen Stützkörper für eine Rohrpresskupplung mit den Merkmalen der Patentansprüche 1 bzw. 6 sowie durch ein Verfahren zur Herstellung eines dertatigen Stützkörpers mit den Merkmalen des Patentanspruchs 15 gelöst.

Vorteilhafte Ausgestaltungen sind in den Unteransprüchen beschrieben.

Die erfindungsgemäße Rohrpresskupplung dient der Verbindung eines Rohres, das insbesondere aus Metall oder Kunststoff bestehen kann, mit einem auf das Rohrende aufschiebbaren und an seiner Innenwand profilierten Stützkörper. In der Regel wird der Stützkörper so auf ein Rohrende aufgeschoben, dass eine teilweise axiale Überlappung zwischen Rohrende und Stützkörper entsteht. Der Stützkörper kann an seiner Außenseite bzw. seinem nicht mit dem Rohr überlappenden Ende quasi beliebig ausgestaltet sein; insbesondere kann dieser ein spiegelbildliches Ende für die Herstellung einer weiteren Pressverbindung, einen Gewindeabschnitt, einen Winkel od. dgl. aufweisen. Die erfindungsgemäße Rohrpresskupplung wird bevorzugt ohne innere Stützhülse eingesetzt, wenngleich der Einsatz einer derartigen inneren Stützhülse nicht prinzipiell ausgeschlossen ist.

Der Stutzkörper weist in dem für das Aufschieben des Rohrendes vorgesehenen axialen Bereich einen näherungsweise dem Außendurchmesser des Rohrendes zuzüglich Toleranzen (Toleranz Außendurchmesser Rohrende zzgl. Toleranz Innendurchmesser Stützkörper) entsprechenden Grundinnendurchmesser *d* oder auch einen größeren Durchmesser auf. Hierdurch ist gewährleistet, dass der Stützkörper für die Herstellung der Verpressung auf das Rohrende aufgeschoben werden kann, ohne dabei behindert zu werden.

Der Stützkörper der Rohrpresskupplung weist im nicht verpressten Zustand mindestens eine zur Außenseite weisende ringförmige Aufbauchung auf, an deren Innenseite mindestens ein Zahnmittel mit einer Höhe *h* zum Eingriff in das Rohrende bei einer Verpressung der Rohrpresskupplung angeordnet ist, wobei die Spitze des Zahnmittels nicht nach innen über den Grundinnendurchmesser *d* des Stützkörpers hervorsteht, so dass der Stützkörper ohne Behinderung durch das oder die Zahnmittel über das Rohrende geschoben werden kann. Das wenigstens eine Zahnmittel kann eine beliebige Form aufweisen, z.B. rechteckig, dreieckig, mit einer oder mehreren Spitzen etc. Auch mehrere, dicht nebeneinander liegende Zähne, die in dem Rohr zu einem einzigen zusammenhängenden Abdruck führen, sollen im Rahmen der vorliegenden Erfindung als ein einziges Zahnmittel gelten.

Im Rahmen der Erfindung ist dem Zahnmittel oder zumindest einem der Zahnmittel (sofern mehrere vorhanden sind) eine Aufbauchung zugeordnet, wobei bevorzugt jedem Zahnmittel eine Aufbauchung zugeordnet ist. Die Aufbauchung schließt sich jeweils axial an die Flanken des zugehörigen Zahnmittels an und wird durch das Zahnmittel in zwei Teilabschnitte aufgeteilt, nämlich einen dem Rohrende zugewandten ersten Teilabschnitt bzw. einen dem Rohrende abgewandten zweiten Teilabschnitt. Der Innenradius des Stützkörpers steigt zu beiden Seiten des Zahn mittels zunächst um die Zahnhöhe *h* und geht mit zunehmender axialer Entfernung vom Zahnmittel über eine vorgegebene Länge *l*₁ bzw. *l*₂ bis näherungsweise auf den dem Grundinnendurchmesser entsprechenden Radius *d*/*2* zurück. Dabei ist - im Gegensatz zum Stand der Technik - im Bereich der beiden Teilabschnitte der Aufbauchung und an den jeweiligen Enden der Teilabschnitte kein weiteres Zahnmittel vorgesehen.

Dem zuletzt genannten Merkmal liegt im Rahmen der vorliegenden Erfindung die Erkenntnis zugrunde, dass die Tendenz, eine Profilierung mit möglichst vielen, dicht beieinander liegenden Zähnen zu schaffen, sich für die Dichtwirkung eher kontraproduktiv auswirkt. Dies liegt daran, dass mehrere, relativ nahe beieinander liegende Zähne das Rohr als Ganzes - d.h. auch zwischen den Zähnen - deformieren. Insbesondere bei dünnwandigen Rohren wirken also während des Verpressungsvorganges die Verpressungskräfte für mehrere Zähne auf einen Rohrabschnitt ein, was dazu führt, dass sich insbesondere dünnwandige Rohre inelastisch verformen, d.h. vor der Verpressung zurückweichen, was für die Qualität der Verpressung höchst nachteilig ist.

Ferner wurde im Rahmen der vorliegenden Erfindung die Erkenntnis gewonnen, dass es für eine langzeitstabile Verpressung von großer Bedeutung ist, dass das Rohrende von dem Stützkörper möglichst vollflächig umschlossen wird; d.h., dass Stützkörper und Rohrende im verpressten Zustand über die gesamte axiale Länge der Verpressung möglichst keine Hohlräume aufweisen sollen. Derartige Hohlräume beeinträchtigen nämlich die Stabilität gegenüber Biege- und Torsionsbelastungen. Ferner beeinträchtigen diese auch die Druckstabilität, da bei Druckstößen das Material des Rohrendes in vorhandene Hohlräume hinein oszilliert kann, was auf längere Sicht zu Undichtigkeiten führt. Bei Verpressungen mit mehreren, relativ dicht beieinander liegenden Zähnen entstehen jedoch gerade relativ viele Hohlräume. Dagegen wird im Rahmen der Erfindung dadurch, dass die Aufbauchung so gestaltet ist, dass der Stützkörper beim Verpressvorgang bis auf einen kleinen Bereich um das (jeweils einzige) Zahnmittel herum fest an das Rohrende angedrückt wird, und durch die Reduzierung der Zahnmittel die Bildung von Hohlräumen weitgehend vermieden und das Rohrende gleichzeitig optimal abgestützt.

Die beschriebene Rohrpresskupplung hat den Vorteil, dass diese verhältnismäßig einfach und sicher an einem Rohrende befestigt werden kann. Der Stützkörper wird zur Montage über das Rohrende geschoben, und anschließend wird die mindestens eine Aufbauchung durch radial einwärts gerichtete Presskräfte nach innen gedrückt. Dabei kommt der innen gelegene Zahn in Kontakt mit der Außenwand des Rohrendes, in die er sich schließlich eingräbt. Hierdurch wird eine sichere axiale Fixierung zwischen Stützkörper und Rohrende erreicht, ohne dass das Rohrende in größeren Bereichen deformiert würde. Für den beschriebenen Pressvorgang sind ferner nur verhältnismäßig kleine Kräfte zum Eindrücken der Aufbauchungen erforderlich, wobei sich der über die Breite einer Aufbauchung aufgenommene Verpressungsdruck in vorteilhafter Weise an der Spitze des innen gelegenen Zahnes zu einer hohen Kraft konzentriert.

Die Dichtwirkung der Verpressung kann durch Torsionsbewegungen stark beeinträchtigt werden. In einer Ausführungsform weist die Innenwand des Stützkörpers daher optional Bereiche auf, die mit einer verdrehsichernden Struktur versehen sind. Eine solche Struktur kann beispielsweise in einer Rändelung oder Aufrauung bestehen. Alternativ oder zusätzlich können an der Innenseite des Stützkörpers axial verlaufende Sicken vorgesehen sein. Während die Zähne der Aufbauchungen für eine axiale Sicherung des Stützkörpers auf einem Rohrende sorgen, kann durch die genannten Bereiche zusätzlich eine Verdrehsicherung der Rohrpresskupplung bewirkt werden. Durch den im Rahmen der Erfindung erzielten nahezu vollflächigen Kontakt zwischen Rohrende und Stützkörper und der damit verbundenen Reibungskräfte kann jedoch unter Umständen auch auf eine zusätzliche Verdrehsicherung verzichtet werden.

Gemäß einer vorteilhaften Ausgestaltung ist das in der Aufbauchung nach außen über den normalen Durchmesser des Stützkörpers überstehende Volumen etwa gleich groß wie das an der Innenseite der Aufbauchung in Bezug auf den normalen Innendurchmesser des Stützkörpers gemessene fehlende Volumen, wenn diesbezüglich das Materialvolumen des Zahnes ohne Berücksichtigung bleibt. Eine derartige Aufbauchung kann beim Verpressen vollständig eingeebnet werden, ohne dass dabei an der Innenseite des Stützkörpers Überstände - abgesehen vom Zahn - oder Hohlräume entstünden.

Der Stützkörper weist (mindestens) zwei Aufbauchungen mit jeweils einem innen gelegenen Zahn auf, die durch zylindrische Abschnitte voneinander getrennt sind, wobei der axiale Abstand der Aufbauchungen mindestens das Doppelte der Breite der Aufbauchungen beträgt. Durch in entsprechend großem Abstand angeordnete Aufbauchungen mit zugehörigen Zähnen wird erreicht, dass der Druck der Zähne auf das Rohrende jeweils nur isoliert und nicht als ein Flächendruck wirkt, der zu einer breiten Verformung des Rohrendes führen würde. Ferner zeigt sich, dass die bevorzugte Zahl von zwei Aufbauchungen in der Regel ausreichend für eine sichere und gute Verbindung mit einem Rohrende ist.

In einer alternativen Ausführungsform der Erfindung sind die Aufbauchungen - in einem axialen Schnitt gesehen - jeweils in Form eines gleichschenkligen Dreiecks ausgebildet, wobei sich der Innendurchmesser des Stützkörpers - ausgehend von dem Wert *d*+ 2**h* (Grundinnendurchmesser des Zahnmittels zuzüglich doppelter Zahnhöhe) unmittelbar an den Zahnflanken - mit zunehmendem Abstand von dem Zahnmittel linear beiderseitig wieder bis auf die den Grundinnendurchmesser *d* verjüngt. Falls mehrere Zähne vorgesehen sind (im Rahmen der Erfindung soll jedoch die Zahl der Zähne möglichst klein sein), gehen die gleichschenkligen Dreiecke bevorzugt unmittelbar ineinander über, so dass sich im axialen Profil näherungsweise eine Art Dreieckswelle ergibt. Die Auflagepunkte des Profils, an denen die einzelnen Aufbauchungen ineinander übergehen, bilden während des Verpressungsvorganges bei ihrer inelastischen Verformung eine Art Gelenk, so dass sich die Aufbauchungen mit minimalen Verpresskräften nahezu vollflächig an die Rohraußenseite anlegen. Diese Ausführungsform kommt somit mit minimalen Verpresskräften bei maximaler Verpressungswirkung aus. Um zu vermeiden, dass das Rohrende inelastisch deformiert wird und um gleichzeitig zu vermeiden, dass das Rohrende über einen breiteren axialen Bereich durch mehrere Zähne gemeinsam verformt wird, kommt es darauf an, dass die Zahnhöhe zum einen so klein wie möglich gewählt wird, um unter Berücksichtigung der Toleranzen noch ein zuverlässiges Abdichten des Zahnmittels zu ermöglichen. Die entsprechende Zahnhöhe hängt insbesondere von der Härte der Oberfläche des zu verpressenden Rohrmaterials ab. Versuche haben ergeben, dass die Eindringtiefe der Zähne in das Rohrende je nach Material nur wenige 1/100 mm beträgt. Um unnötige Hohlräume zu vermeiden und die Verpresskräfte zu reduzieren, sollte die Zahnhöhe nur wenig mehr als dieser maximalen Eindringtiefe zuzüglich der maximal auftretenden Toleranzen entsprechen. Zum anderen darf der Abstand der Zähne einen gewissen Wert nicht unterschreiten, so dass die Ausformungen eine gewisse Mindestbreite haben sollten. Versuche haben ergeben, dass z.B. bei der Verpressung von Edelstahlrohren der halbe Zahnabstand mindestens etwa dem Zehnfachen der Zahnhöhe entsprechen muss, um optimale Ergebnisse zu erzielen.

Betrachtet man den Winkel, die die Schenkel des gleichschenkligen Dreiecks der Aufbauchungen mit der Mittenachse bilden, so liegt dieser Winkel zwischen 1 und 15°. Für die Verpressung von Edelstahlrohren haben sich 4° bis 6° als zweckmäßig erwiesen, für die Verpressung von Kupferrohren können auch höhere Winkel von 3° bis 10° verwendet werden. Für Kunststoffrohre kommen je nach Kunststoff Winkel zwischen 1 ° bis 15° in Frage. Insgesamt sind die Ausbuchtungen im Vergleich zu bekannten Verpressungen sehr flach und lang gestreckt ausgebildet, so dass sich benachbarte Zähne nicht beeinflussen können.

Bei der vorstehend beschriebenen Ausführungsform können die Verpresskräfte sehr niedrig gehalten werden, so dass preiswertere Verpresswerkzeuge verwendet werden können. Zudem kann die Materialstärke des Stützkörpers gegenüber bekannten Verpressungssystemen reduziert werden. Typischerweise werden Wandstärken eingesetzt, die gleich oder kleiner (typischerweise bis zu einem Faktor 0,7) der Wandstärke des zu verpressenden Rohres sind. Die Außenseite des Stützkörpers gemäß der vorstehend beschriebenen Ausführungsform ist nahezu glatt, so dass sich eine ausgesprochen gleichmäßige Kraftaufbringung über den axialen Verpressweg der Presshülse ergibt.

Mit der erfindungsgemäßen Rohrverpressung können somit auch dünnwandige Rohre sicher verpresst werden, als dies nach dem Stand der Technik möglich ist.

Der Zahn an der Innenseite einer Aufbauchung ist vorzugsweise ringförmig geschlossen und um die Achse des Stützkörpers umlaufend ausgebildet. Bei einer solchen geschlossenen Form wird gewährleistet, dass die Verbindung zwischen Stützkörper und Rohr ohne weitere Hilfsmittel auch gegen den Austritt von Flüssigkeit oder Gasen abgedichtet ist.

Ferner weist der an der Innenseite der Aufbauchung gelegene Zahn vorzugsweise eine Spitze mit hoher Flächenpressung auf. Die Spitze muss diesbezüglich nicht unbedingt scharfkantig (d.h. geometrisch als Schnittkante zweier Flächen) ausgebildet sein, jedoch sollte bei einer nicht punkt- oder linienförmigen Spitze die Fläche der Spitze verhältnismäßig klein sein, um bei Kontakt mit einem Rohrende einen hohen Druck erzeugen zu können.

Die Form des Zahns ist im Querschnitt gesehen vorzugsweise symmetrisch zu einer senkrecht zur Rohrachse liegenden Ebene. Insbesondere kann sie im Querschnitt dreieckig ausgebildet sein mit einer zum Beispiel rechtwinkeligen Dreiecksspitze. Ein symmetrischer Zahnquerschnitt hat den Vorteil, dass die Spitze des Zahns bei einem Druck auf das Rohrende nicht zu einem Umknicken in eine bestimmte Richtung tendiert, sondern sich möglichst senkrecht und tief in das Rohrende eingräbt.

Gemäß einer Weiterbildung der Rohrpresskupplung weist der Stützkörper an seiner Innenwand einen Anschlag auf, der als Einschubbegrenzung für ein anzukoppelndes Rohrende dient. Vorzugsweise wird dieser Anschlag durch ein separates, im Inneren des Stützkörpers fest angeordnetes Anschlagrohr gebildet.

Ferner weist der Stützkörper an seiner Außenseite vorzugsweise einen Vorsprung auf, welchen ein Presswerkzeug hintergreifen kann, um den Stützkörper gegen ein axiales Ausweichen beim Verpressen der Rohrpresskupplung zu sichern. Der genannte Vorsprung ist vorzugsweise als separater Ring ausgebildet, welcher in eine Nut an der Außenseite des Stützkörpers nach Art eines Federringes eingreift.

Gemäß einer bevorzugten Ausführungsform der Rohrpresskupplung umfasst diese neben dem Stützkörper noch eine über den Stützkörper zu schiebende Presshülse, wobei der Innendurchmesser der Presshülse kleiner als der Außendurchmesser der Aufbauchungen des Stützkörpers ist. Im Übrigen ist der Innendurchmesser im Wesentlichen gleich dem normalen Außendurchmesser des Stützkörpers. Wenn die Presshülse daher von einem geeigneten Presswerkzeug in axialer Richtung über den Stützkörper geschoben wird, drückt diese zwangsläufig die Aufbauchung des Stützkörpers nach innen ein. Hierbei graben sich die Zähne des Stützkörpers in die Außenwand eines im Stützkörper steckenden Rohrendes ein, wodurch die gewünschte Verbindung hergestellt wird. Die Presshülse verbleibt auf dem Stützkörper und stellt entsprechende radiale Vorspannkräfte sicher.

Vorzugsweise ist die Presshülse an ihrem äußeren Ende, welches definitionsgemäß beim Aufschieben der Presshülse auf den Stützkörper zuletzt axial mit dem Stützkörper überlappt, mit einer Verengung des Innendurchmessers versehen. Diese Verengung sorgt dafür, dass das äußere Ende noch einmal eine zusätzliche zweite Verpressung des Stützkörpers beziehungsweise seiner Aufbauchungen bewirkt, wenn es auf den Stützkörper geschoben wird.

Des Weiteren sind der Stützkörper und die Presshülse optional so dimensioniert, dass der Stützkörper im montierten Zustand der Rohrpresskupplung über die Presshülse übersteht. Der Stützkörper wöbt sich dann im Überstandbereich leicht nach oben, so dass ein Abziehen oder Abfallen der Presshülse verhindert wird und hierdurch die Verpressung gesichert wird.

In einer bevorzugten Ausgestaltung der Erfindung ist vorgesehen, dass die Verformung der Aufbauchungen des Stützkörpers im Wesentlichen sequentiell - d.h. hintereinander erfolgt, so dass die erforderlichen Verpressungskräfte geringer sind als bei einer Rohrpresskupplung, bei der die Deformationen für mehrere Zähne - beispielsweise durch eine gestuft ausgebildete Presshülse - mehr oder minder gleichzeitig vorgenommen werden. Deshalb beträgt bei der erfindungsgemäßen Rohrpresskupplung der Verpressungsweg bevorzugt mindestens zwei Drittel der Länge der Presshülse, so dass geringere Verpressungskräfte über einen längeren Verpressungsweg verteilt werden. Hierdurch werden auch die Anforderungen an die Stabilität des Stützkörpers und der Presshülse verringert. Wenn vorstehend ausgeführt wurde, dass die Verpressung "im Wesentlichen" sequentiell erfolgt, so soll damit ausgedrückt werden, dass der Hauptteil der Deformationsarbeit an den einzelnen Aufbauchungen hintereinander ausgeführt wird. Es kann jedoch - wie vorstehend bereits beschrieben - vorgesehen sein, dass durch eine Querschnittsverengung der Presshülse an einem oder mehreren Zähnen eine zweite Deformationen bzw. eine Art "Nachverpressung" vorgenommen wird, die auch gleichzeitig mit der ersten Deformation einer anderen (weiter rohrendseitig liegenden) Aufbauchung erfolgen kann.

Die Erfindung betrifft ferner ein Verfahren zur Herstellung einer Rohrpresskupplung der oben beschriebenen Art, welches die folgenden Schritte umfasst:
a) Drehen eines Stützkörpers mit mindestens einer Aufbauchung und einem in der Aufbauchung angeordneten Zahn sowie mit einer Verengung des Innendurchmessers;
b) Montieren eines in eine Nut (7) an der Außenseite des Stützkörpers (1) eingreifenden Ringes (4) als Hintergriff für das Verpressungswerkzeug; und/oder
c) Presspassung einer in den Stützkörper (1) eingeführten Anschlaghülse (9) in der Verengung.

Prinzipiell könnte ein Stützkörper für eine Rohrpresskupplung der beschriebenen Art vollständig durch Drehen hergestellt werden. Wenn der Stützkörper einen ringförmigen Hintergriff für den Ansatz eines Verpressungswerkzeuges aufweisen soll, wäre jedoch eine relativ große Materialmenge abzutragen. Daher kann im Rahmen des erfindungsgemäßen Verfahrens vorgesehen sein, den Hintergriff als separates, in einer Nut befestigtes Teil aufzuclipsen. Entsprechende Materialeinsparungen lassen sich dadurch erzielen, dass der Anschlag für das Rohrende im inneren des Stützkörpers durch den Einsatz einer separaten Anschlaghülse gebildet wird.

Im Folgenden wird die Erfindung mit Hilfe der Figuren beispielhaft näher erläutert. Es zeigen:
- Fig. 1: einen Querschnitt durch die Wand einer auf ein Rohrende aufgesetzten erfindungsgemäßen Rohrpresskupplung in einer ersten Ausführungs- form zu Beginn ihrer Montage;
- Fig. 2: die ausgehend von Fig.1 endmontierte Rohrpresskupplung;
- Fig. 3: einen Querschnitt durch die Wand einer Ausgestaltung eines erfin- dungsgemäßen Stützkörpers mit separater Anschlaghülse;
- Fig. 3a: eine schematische Darstellung einer Ausführungsform einer erfin- dungsgemäßen Verdrehsicherung;
- Fig. 4: einen Querschnitt durch eine erfindungsgemäße Presshülse;
- Fig. 5: eine Aufsicht auf einen Ring 4 einer erfindungsgemäßen Rohrpress- kupplung;
- Fig. 6a,b: einen Querschnitt durch einen Stützkörper gemäß einer zweiten Aus- führungsform der Erfindung mit einer Detaildarstellung;
- Fig. 7a,b: schematische vergrößerte Ansichten der Ausführungsform gemäß Fig. 6a im unverpressten Zustand (Fig. 7a) und bei Beginn der Verpres- sung (Fig. 7b), und
- Fig. 8a,b: schematische Querschnitte durch eine gegenüber den Figuren 6a und 7a modifizierte Ausführungsform mit nur einem Zahn, die nichts zu der Erfindung gehört.

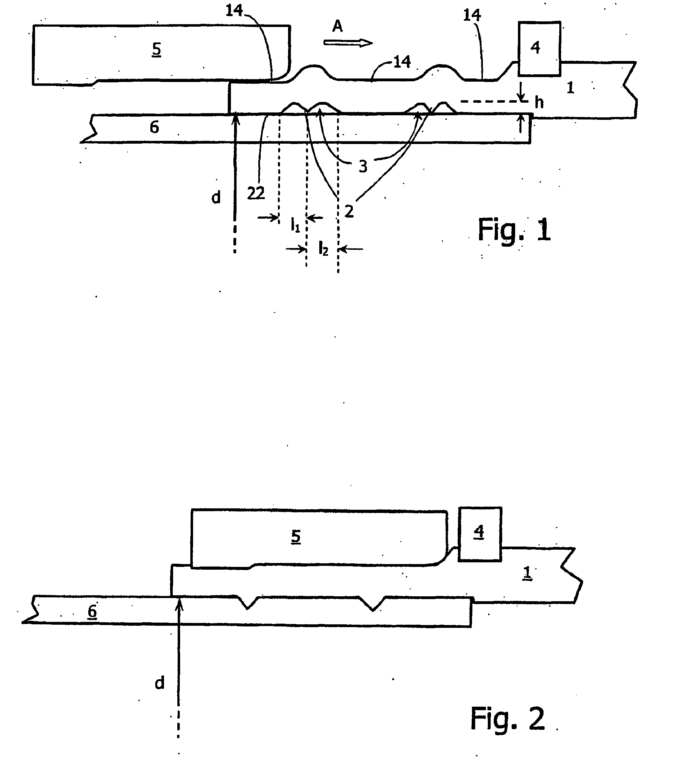

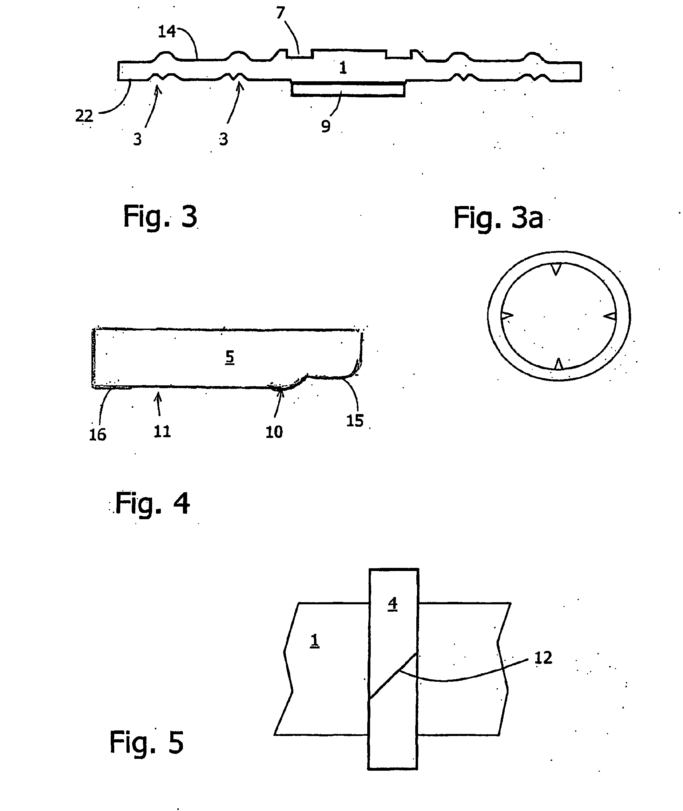

Die in Fig. 1 zu Beginn ihrer Montage dargestellte erfindungsgemäße Rohrpresskupplung umfasst einen Stützkörper 1 sowie eine Presshülse 5. Vom Stützkörper 1 ist dabei nur ein Ende dargestellt; das andere Ende kann spiegelbildlich hierzu ausgebildet sein (vgl. Fig. 3), winkelförmig abknicken, ein Gewinde aufweisen oder eine sonstige beliebige Armatur tragen. Ferner ist die gesamte Anordnung (im Wesentlichen) rotationssymmetrisch um die Rohrachse, so dass die Darstellungen überwiegend auf einen Querschnitt durch einen Wandbereich beschränkt werden. Die Darstellung in Figur 1 ist nicht maßstäblich; so sind die Zähne zur Veranschaulichung höher und breiter dargestellt.

In den Stützkörper 1 ist der Endbereich eines Rohrendes 6 eingeschoben, welches in der später noch zu beschreibenden Weise mit dem Stützkörper 1 mechanisch fest und gegen den Austritt von Flüssigkeit beziehungsweise Gas dicht verbunden werden soll.

Der Stützkörper 1 weist zwei voneinander deutlich beabstandete ringförmige Aufbauchungen 3 mit jeweils einem Zahn 2 auf, wobei sich die Aufbauchungen jeweils als eine nach außen gerichtete Wulst oder Wölbung an der Außenseite des Stützkörpers 1 darstellen. Die Aufbauchungen beginnen am Zahngrund zunächst auf der Höhe h Zahns 2 und fallen dann wieder auf den mit d bezeichneten Grundinnendurchmesser ab. Das hierbei nach außen über den normalen Außendurchmesser des Stützkörpers 1 hervorstehende Volumen der Aufbauchungen 3 entspricht vorzugsweise genau dem an der Innenseite der Aufbauchungen 3 gegenüber dem Grundinnendurchmesser des Stützkörpers 1 fehlenden Volumen (wobei beim inneren Volumen die Zähne 2 unberücksichtigt bleiben sollen). Dies gewährleistet, dass die Aufbauchungen beim Verpressen so eingeebnet werden können, dass an der Innenseite weder Lücken, Hohlräume noch Überstände (abgesehen von den Zähnen 2) entstehen. Die Aufbauchungen gehen aus diesem Grunde auch ohne einen weiteren Zahn jeweils in einen zylindrischen Abschnitt 14 über.

An der Innenseite der Aufbauchungen 3 ist jeweils ein ringförmig umlaufender Zahn 2 angeordnet. Die Spitzen der Zähne 2 stehen dabei vor der Montage vorzugsweise nicht über den Innendurchmesser des Stützkörpers 1 nach innen hervor, so dass das Rohrende 6 ohne Konflikt mit den Zähnen 2 in der Stützkörper 1 eingeschoben werden kann. Die Höhe des Wulstes 3 ist typischerweise etwa gleich der Zahnhöhe oder kleiner als diese. Im dargestellten Beispiel ist der Querschnitt der Zähne 2 symmetrisch dreieckig, wobei der Flankenwinkel vorzugsweise ca. 45° beträgt. Die Symmetrie der Zähne 2 hat gegenüber einer asymmetrischen Sägezahnform den Vorteil, dass die Zähne 2 bei einem Verpressen nicht bzw. tendenziell weniger zur Seite gedrückt werden, was ihre Dichtwirkung mindern würde.

Durch die spitze Form der Zähne 2 können diese eine verhältnismäßig hohe Flächenpressung auf die Oberfläche des Rohrendes 6 ausüben, wenn die Aufbauchungen 3 bei Vorschub der Presshülse 5 in Richtung des Pfeils A radial nach innen gedrückt werden. Wie in Fig. 2 gezeigt ist, graben die Zähne 2 sich bei einem solchen Vorschub der Presshülse 5 in das Rohrende 6 ringförmig ein und sorgen hierdurch für eine Abdichtung der Verbindung. Die Aufbauchungen 3 werden bei diesem Vorgang nahezu eingeebnet. Das Material des Stützkörpers 1 wird in der Regel etwas härter beziehungsweise mit höherer Vergütung gewählt als das Material des Rohrendes 6, damit sich die Zähne beim Verpressvorgang nicht zu stark deformieren.

Die Innenbereiche des Stützkörpers 1 außerhalb der Bereiche der Aufbauchungen 3 deformieren das Rohrende 6 beim Verpressen nicht, sondern liegen nur mit einem gewissen Druck an und halten das Rohrende elastisch unter Spannung. Da die Aufbauchungen 3 verhältnismäßig weit voneinander entfernt sind, entsteht keine flächenartige Druckbelastung des Rohrendes 6. Es kommt daher vorrangig zu einer punkt- beziehungsweise linienförmigen Verpressung zwischen den Zähnen 2 und dem Rohrende 6 mit sehr hohen Presskräften, die eine größere Dichtigkeit gewährleisten als eine großflächige Deformation des Rohrendes. Für die Gewährleistung einer entsprechenden Zugfestigkeit sind die im Beispiel vorgesehenen zwei Zähne 2 ausreichend, wenngleich natürlich ohne weiteres auch noch mehr Aufbauchungen mit Zähnen vorgesehen werden können. Es kann aber auch nur ein einzelner Zahn eingesetzt werden.

Anders als in der Figur dargestellt, könnten die Zähne 2 auch einen anderen als einen dreieckigen Querschnitt haben. So könnte der Querschnitt beispielsweise rechteckförmig oder trapezförmig sein, wobei jedoch der Wirkungsbereich der Zähne beziehungsweise der Spitzen verhältnismäßig klein sein sollte, um eine hohe Flächenpressung zu erreichen. Weiterhin ist die axiale Erstreckung der Aufbauchungen 3 an der Außenseite vorzugsweise wesentlich größer als die Breite des Zahngrundes, wodurch eine Verstärkung der von außen aufgebrachten Presskräfte erreicht wird. Der höchst Punkt der Aufbauchung befindet dabei sich direkt oberhalb der Zahnspitze.

Ein Vorteil der beschriebenen Rohrpresskupplung gegenüber bekannten Konzepten ist, dass der Stützkörper 1 nicht oder nur partiell deformiert werden muss. Bei bekannten Systemen wird dagegen ein Stützkörper durch eine Überwurf-Presshülse über den gesamten Umfang zusammengeschnürt und drückt sich mit entsprechend breiten Profilierungen (aufgrund der eng stehenden Zähne) in das Rohrende ein. Für ein solches Zusammenschnüren sind sehr hohe Kräfte erforderlich, so dass die Presshülse entsprechend stabil ausgebildet sein muss und die Verpressung ohne zusätzliche Innenstützhülse erst ab bestimmten Rohrwandstärken möglich ist. Bei dem erfindungsgemäßen System sind die erforderlichen Kräfte dagegen sehr viel kleiner. Die verhältnismäßig schmalen und niedrigen Zähne 2 verhindern, dass das Rohrende "kollabiert", also inelastisch über größere Bereiche zusammen geschnürt wird, in denen die Gegenspannung des Rohrendes verloren geht und daher die Dichtwirkung leidet.

Um die Rohrpresskupplung auch gegen Torsionsbelastungen (Verdrehen, insbesondere bei dem Montagevorgang) sowie Schwingungsbelastungen stabil zu gestalten, wird vorzugsweise eine Verdrehsicherung vorgesehen. Diese besteht darin, dass die in Fig. 3 mit 22 bezeichnete Innenfläche (und gegebenenfalls weitere Innenflächen) des Stützkörpers 1 mit einer verdrehsichernden Struktur versehen werden. Insbesondere können diese Flächen aufgeraut oder gerändelt gestaltet werden. Dies ist möglich, da die genannten Flächen keine Halte- oder Dichtfunktion haben. Das Aufrauen der Flächen kann unmittelbar beim Drehen des Stützkörpers 1 erfolgen, so dass kein zusätzlicher Arbeitsgang erforderlich ist. Die Lage des Verdrehsicherungsbereiches unmittelbar im Anschluss an das Stirnende des Stützkörpers hat den herstellungstechnischen Vorteil, dass diese Bereiche bearbeitet werden können, ohne die dahinter liegende Zahnstruktur zu beschädigen. Weiterhin werden können in diesen Bereichen problemlos relativ hohe Verpressungskräfte aufgewandt werden.

In Fig. 3a ist eine alternative Ausführungsform für eine Verdrehsicherung dargestellt. Die Figur zeigt eine (nicht maßstäbliche) Schnittdarstellung des Stützkörpers 1 im Bereich 22. Wie ersichtlich, ist die Verdrehsicherung in dieser Ausführungsform durch in 90°-Abständen angeordnete (in der Größe übertrieben dargestellte) Sicken realisiert. Diese Sicken drücken sich in das Rohrende ein und fixieren es somit gegenüber unerwünschten Torsionsbewegungen. Selbstverständlich sind auch andere Ausgestaltungen der Verdrehsicherung möglich, bei denen die Rotationssymmetrie des Stützkörpers zumindest in einem axialen Teilbereich aufgehoben ist.

Wie in Fig. 1 weiter erkennbar ist, weist der Stützkörper 1 in seinem Inneren einen Anschlag auf, welcher die Einstecktiefe des Rohrendes 6 begrenzt (vgl. Fig. 2). Hierdurch wird eine richtige Montage der Rohrpresskupplung erheblich erleichtert.

Ein Stützkörper 1 der in Fig. 1 dargestellten Art kann prinzipiell komplett durch Drehen aus einem Vollkörper hergestellt werden. Eine alternative Herstellungsweise wird nachfolgend unter Bezugnahme auf Fig. 3 erläutert, die einen Querschnitt durch einen symmetrischen Stützkörper 1 zeigt. Bei dem betreffenden Herstellungsverfahren wird ein Rohrende zunächst außen und innen etwas abgedreht, so dass sich die gewünschte Kontur mit den Aufbauchungen 3 und den zugehörigen Zähnen 2 ergibt und normalerweise immer vorhandene Abweichungen des Rohrquerschnitts von der Kreisform ausgeglichen werden. Wie bereits erläutert wurde, können der innere Anschlag für die Einstecktiefe des Rohres sowie ein Vorsprung bzw. Hintergriff 4 an der Außenseite für den Ansatz eines Verpresswerkzeuges prinzipiell auch durch Drehen hergestellt werden. Vorzugsweise wird der Innenanschlag jedoch als separater Ring 9 ausgebildet sein. Dabei wird der Innendurchmesser des Stützkörpers 1 in dem Bereich, in dem der Innenanschlag liegen soll, etwas verengt, d.h. unter Ausbildung eines kleinen Absatzes ausgebildet. Nach dem Drehen kann dann eine separate Anschlaghülse 9 in den Stützkörper 1 eingeschoben werden, wobei sich in dem verengten Bereich eine Presspassung ergibt. Dabei reicht eine relativ lockere Passung mit einem Übermaß von typischerweise 5/100 mm aus, da der Innenanschlag keine großen Kräfte aufnehmen muss, sondern nur bei der Montage das Einschieben des Rohres bis zu einer definierten Tiefe gewährleisten soll. Durch die Ausbildung des Innenanschlages als separate Anschlaghülse 9 kann die erforderliche Stärke des Rohres, aus dem der Stützkörper 1 gedreht wird, erheblich reduziert werden. Außerdem hat die Verwendung einer zusätzlichen Anschlaghülse den Vorteil, dass diese auf Wunsch genau an den Innendurchmesser des anzukoppelnden Rohres angepasst werden kann, so dass der Übergang zwischen Rohrende 6 und Stützkörper 1 nahezu ohne Querschnittsverengung erfolgt, was die Strömungseigenschaft verbessert und die Bildung unerwünschter Totzonen (Bereiche mit Flüssigkeit oder Gas ohne Strömung) vermeidet.

Wie bereits erwähnt weist der Stützkörper 1 an seiner Außenseite einen ringförmigen Vorsprung 4 für einen Anschlag beziehungsweise einen Hintergriff eines Verpresswerkzeugs auf. Vorzugsweise wird dieser Vorsprung 4 ebenfalls als ein separater Ring (in der Art eines Federringes) ausgebildet. Wie die Aufsicht auf den Ring 4 in Fig. 5 zeigt, ist der Ring 4 an einer Stelle des Umfangs vorzugsweise durch einen schräg verlaufenden Schlitz 12 unterbrochen. Bei der Herstellung des Stützkörpers 1 wird in diesen eine Nut 7 (Fig. 3) eingearbeitet, in weiche dann von außen der Ring 4 durch Aufschieben eingerastet werden kann.

Die Herstellung der in Fig. 4 separat (nicht maßstäblich) dargestellten Überwurf-Presshülse 5 beginnt mit einem kurzen Rohrabschnitt, der nur von einem Basisrohr abgestochen werden muss und der nur an seinem inneren (in Fig. 4 rechten) Ende 15 eine Abrundung zur leichteren Aufbringung auf einen Stützkörper hat. Außen hat die Presshülse 5 das ursprüngliche Rohrmaß. Bei der Herstellung der Presshülse 1 ist also sehr wenig Zerspanungsarbeit erforderlich. Da die Presshülse 5 keine hohen Kräfte aufbringen muss, kann sie verhältnismäßig dünn ausgebildet sein. Die Presshülse 5 muss nicht unbedingt gedreht werden, sondern kann auch über einen Kalibrierdorn in die gewünschte Form gepresst werden, was eine bessere Oberflächengüte als bei der spanabhebenden Bearbeitung ergibt.

Die Presshülse 5 wird in vorteilhafter Weise in der in Fig. 1 dargestellten Position bereits auf dem Stützkörper 1 aufsitzend vormontiert. Um ein Abfallen der Presshülse 5 in diesem Zustand zu verhindern (Unverlierbarkeit), hat diese an ihrem inneren, in Fig. 1 und 4 rechten Ende 15 ein leichtes Untermaß, d.h. einen verengten Innendurchmesser.

Die Verpressung erfolgt bevorzugt zweistufig (in den Figuren 1 und 2 nicht dargestellt). Hierzu weist die Presshülse 5 gemäß Fig. 4 einen ersten Radius 15 auf, der so bemessen ist, dass bei der Verpressung des Stützkörpers 1 der Innendurchmesser vollständig auf den Rohraußendurchmesser reduziert wird, wobei die Zähne in das Rohr eindringen. In einem Abstand folgt ein zweiter Radius 10, der eine Nachverpressung bewirkt Dieser zweite Radius ist so bemessen, dass das Rohrende 6 auf der gesamten Einstecklänge noch im elastischen Bereich verpresst wird.

Weiterhin ist die Presshülse 5 an ihrem äußeren, in den Figuren linken Ende in einem Bereich 16 der Innenwand etwas stärker eingeschnürt, wobei die Einschnürung etwa 2-3/10 mm betragen kann. Durch diese Verengung wird der Stützkörper am rohrseitigen Ende so komprimiert, dass sich ein überstehendes Teilstück des Stützkörpers etwas nach oben wölbt (nicht dargestellt), so dass ein Abziehen oder Abfallen der Presshülse 5 vermieden wird, so dass die Verpressung selbstsichernd ist.

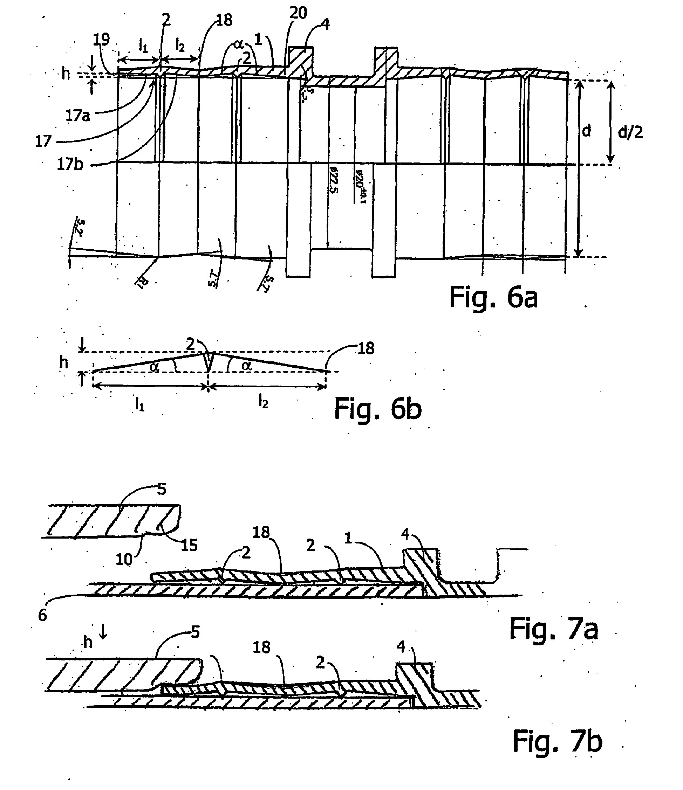

In Fig. 6a ist ein Stützkörper 1 in einer zweiten Ausführungsform der Erfindung im unverpressten Zustand dargestellt, wobei diese Figur im Wesentlichen maßstäblich ist (zu verpressender Rohrdurchmesser 22 mm, Zahnhöhe *h* = 0,55 mm, *l₁* = *l₂*= 5 mm). Der Stützkörper 1 ist einteilig gedreht und weist eine Profilierung auf der Basis gleichschenkliger Dreiecke mit insgesamt zwei radial umlaufenden Zähnen 2 auf. Die dreiecksförmigen, relativ schmalen und flachen Zähne 2 der Höhe *h* befinden sich jeweils in der Mitte zweier Aufbauchungen 17, die innenseitig durch die Zähne 2 in zwei Teilabschnitte 17a und 17b mit den Längen *l₁* und *l*₂ aufgeteilt werden, wobei in diesem Falle *l*₁ gleich *l*₂ ist, was aber nicht notwendigerweise der Fall sein muss. Die Aufbauchungen beginnen 17 zu beiden Seiten der Zahnflanken jeweils mit der Tiefe *h*, d.h., dass der Innenradius gegenüber dem Grundinnenradius *d*/*2* (entsprechend dem halben Grundinnendurchmesser *d*) um *h* zurückspringt. Mit zunehmender Entfernung von dem Zahn 2 verengt sich der Innenradius linear, bis an dem Punkt 18 und an den äußeren Enden 19, 20 des Verpressungsbereichs wieder zumindest näherungsweise der Wert *d* erreicht ist. Der Winkel α, den die Schenkel des gleichschenkligen Dreiecks gegenüber der Mittenachse (in der Figur der Horizontalen) bilden, berechnet sich als α = tan⁻¹(*h* / *l*), wobei in dem in Fig. 6a dargestellten Beispiel a = 5,7° ist Die entsprechenden Größen *h, l*₁, *l*₂ und α sind aus der Detaildarstellung von Fig. 6b näher ersichtlich. Wenngleich die Schenkel in dem Ausführungsbeispiel linear verlaufen, sind auch gekrümmte Formen denkbar. An der Außenseite weist der in Fig. 6 dargestellte Stützkörper 1 in weiten Teilbereichen ein dem Innenprofil entsprechendes Außenprofil auf, jedoch ohne Zähne. In dem an den Hintergriff 4 angrenzenden Bereich 20 ist die Außenseite im Gegensatz zur Innenseite jedoch zylindrisch geformt, so dass sich dort die Materialstärke der Presshülse vergrößert, um in diesem Bereich die etwas geringere Verpressung durch das geweitete rechte Ende 15 der Presshülse 5 zu kompensieren und einen mechanisch stabilen Übergang in den sich anschließenden Abschnitt des Stützkörpers 1 zu gewährleisten.

Wenn die Presshülse 5 übergeschoben wird (vgl. Figuren 7a,b), wird die dreieckswellenförmige Außenkontur gerade gedrückt, wobei der Punkt 18 wie ein Gelenk wirkt. Durch die relativ langen "Hebel" werden auch bei geringen Verpresskräften große Kräfte auf die Zähne 2 ausgeübt. Obwohl der Punkt 18 mit zwei in einem Winkel zueinander stehenden Flanken auf die Rohroberfläche drückt, liegt der gebildete stumpfe Winkel so nahe an 180°, dass der Punkt 18 nicht als Zahnmittel wirkt, sondern beim Pressvorgang gerade gedrückt wird, ohne einen Abdruck auf dem Rohrende zu hinterlassen, zumal die Außenseite des Stützkörpers an dieser Stelle keine Aufbauchung aufweist, so dass dieser Bereich auch nicht verpresst wird. In Zusammenhang mit der vorliegenden Ereindung sollen insbesondere Strukturen im Innenprofil des Stützkörpers 1, die einen stumpfen Winkel von mehr als 90° bilden (z.B. 120°) und/oder auf die während des Verpressungsvorganges keine nennenswerten Presskräfte aufgebracht werden, nicht mehr als Zahnmittel betrachtet werden; derartige Strukturen sind daher auch im Rahmen der vorliegenden Erfindung zwischen den eigentlichen Zahnmitteln 2 möglich.

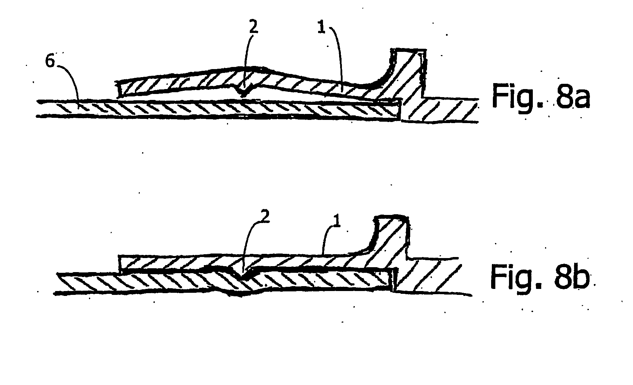

Die Figuren 8a, 8b zeigen eine Ausführungsform, der nichts zu der Erfindung gehört, lediglich mit einem Zahn im unverpressten (Fig. 8a) und im verpressten Zustand (Fig. 8b, Presshülse nicht dargestellt). Für Rohre mit kleinerem Querschnitt reicht ein derartiger einziger Zahn häufig bereits für eine druckfeste und langzeitstabile Abdichtung aus.

## Patentansprüche

1. Stützkörper für eine Rohrpresskupplüng zur Verbindung eines Rohrendes (6) mit dem auf das Röhrende aufschiebbaren und dieses außenseitig umgebenden Stützkörper (1), welcher eine Profilierung aufweist, wobei der Stützkörper im unverpressten Zustand in dem für das Aufschieben des Rohrendes (6) vorgesehenen axialen Bereich wenigstens einen näherungsweise dem Außendurchmesser des Rohrendes zuzüglich Toleranzen entsprechenden Grundinnendurchmesser *d* aufweist, und wobei zur Herstellung der Verbindung Presskräfte auf die Außenseite des Stützkörpers (1) aufgebracht werden konnen, die zu einer Einschnürung des Stützkörpers (1) führen, wobei die innenseitige profilierung des Stützkörpers (1) im unverpresten Zustand wie folgt ausgebildet ist:
- der Stützkörper (1) weist an seiner Innenseite mindestens ein umlaufendes Zahnmittel (2) mit einer Zahnhöhe *h* und jeweils wenigstens einer Zahnspitze auf, die im verpressten Zustand in das Rohrende (6) einschneidet, wobei die Zahnspitze im unverpressten Zustand einen Querschnitt freigibt, dessen Durchmesser in etwa dem Grundinnendurchmesser *d* entspricht;
- axial an die Flanken weinigstens eines Zahnmittels (2) schließt sich jeweils ein dem Rohrende zugewandter erster (17a) bzw. ein dem Rohrende abgewandter zweiter (17b) Teilabschnitt einer Aufbauchung (17) an, wobei der Innenradius des Stützkörpers (1) zu beiden Seiten des Zahnmittels (2) zunächst jeweils näherungsweise um die Zahnhohe *h* steigt und mit zunehmender axialer Entfernung von der Zahnspitze über eine vorgegebene Länge *l*₁ bzw. *l*₂ linear oder gekrümmt bis näherungsweise auf den dem Grundinnendurchmesser entsprechenden Radius *d*/*2* zurückgeht, wobei im Bereich der beiden Teilabschnitte (17a,b) der Aufbauchung und an den jeweiligen Enden der Teilabschnitte der Aufbauchung kein weiteres Zahnmittel vorgesehen ist,
- wobei das Verhältnis zwischen der Zahnhöhe *h* und den Längen *l*₁ bzw. *l*₂ jeweils so gewählt ist, dass für ein gedachtes Dreieck, das die Aufbauchung mit der Mittenachse bildet, die von den Schenkeln dieses Dreiecks mit der Mittenachse der Rohrpresskupplung gebildeten Winkel α₁ bzw.2 = tan⁻¹(*h* / *l*_{*1*bzw. 2}) jeweils im Bereich von etwa 1° bis 15° liegen,
- wobei, sofern mehrere Zahnmittel mit zugehörigen Aufbauchungen (17) vorgesehen sind, die Form der Aufbauchungen (17) einem gedachten Dreieck mit der Höhe h entspricht, wobei das Zahnmittel (2) sich von der Spitze des gedachten Dreiecks zur Außenseite des Rohrendes (6) hin erstreckt, und wobei die Ausbauchungen direkt ineinander übergehen, so dass sich in axialer Richtung ein dreieckswellenförmiges Profil mit darin angeordneten Zahnmitteln (2) ergibt, wobei der wenigstens eine Punkt (18), an dem die Aufbauchungen (17) aneinander stoßen, sich bei dem Verpressungsvorgang gelenkartig verformt.

2. Stützkörper nach Anspruch 1,
**dadurch gekennzeichnet, dass**
diese Winkel etwa im Bereich von 4° bis 6° für die Verpressung von Edelstahlrohren, etwa im Bereich von 3° bis 10° für die Verpressung von Kupferrohren sowie im Bereich von 1 ° bis 15° für die Verpressung von Kunststoffrohren liegen.

3. Stützkörper nach Anspruch 1 oder 2;
**dadurch gekennzeichnet, dass**
die Zahnhöhe *h*, die Längen *l₁* und *l₂* und die Geometrie der Aufbauchung (17) für jedes Zahnmittel (2) jeweils derart gewählt sind, dass die Zahnspitze im Verpressungszustand in die Außenwand des Rohrendes (6) einschneidet und dieses abdichtet, ohne das Rohrende nennenswert inelastisch zu verformen, und dass die Innenseite des Stützkörpers (1) im Bereich der Aufbauchung (17) möglichst vollflächig gegen die Außenwand des Rohrendes (6) anliegt.

4. Stützkörper nach einem der Ansprüche 1 bis 3,
**dadurch gekennzeichnet, dass**
der Stützkörper (1) in den axialen Bereichen neben bzw. zwischen dem Zahnmittel oder den Zahnmitteln (2) ganz oder in Teilbereichen eine im Wesentlichen konstante Wandstärke aufweist, so dass die außenseitige Profilierung des Stützkörpers mit der innenseitigen Profilierung - abgesehen von den innenseitig vorgesehen Zahnmitteln (2) - im Wesentlichen korrespondiert.

5. Stützkörper nach mindestens einem der Ansprüche 1 bis 4,
**dadurch gekennzeichnet, dass**
die Form der wenigstens einen Aufbauchung (17) den Schenkeln eines gleichschenkligen Dreiecks mit *l₁* =*l₂* entspricht, wobei das Zahnmittel (2) sich von der Spitze des gedachten gleichschenkligen Dreiecks zur Außenseite des Rohrendes (6) hin erstreckt.

6. Stützkörper (1) für eine Rohrpresskupplung, zur Verbindung eines Rohrendes (6) mit dem auf das Rohrende aufschiebbaren und dieses außenseitig umgebenden Stützkörper (1), welcher eine Profilierung aufweist, wobei der Stützkörper im unverpressten Zustand in dem für das Aufschieben des Rohrendes (6) vorgesehenen axialen Bereich wenigstens einen näherungsweise dem Außendurchmesser des Rohrendes zuzüglich Toleranzen entsprechenden Grundinnendurchmesser d aufweist, und wobei zur Herstellung der Verbindung Presskräfte auf die Außenseite des Stützkörpers (1) aufgebracht werden können, die zu einer Einschnürung des Stützkörpers (1) führen, wobei die innenseitige Profilierung des Stützkörpers (1) im unverpresten Zustand wie folgt ausgebildet ist:
- der Stützkörper (1) weist an seiner Innenseite mindestens ein umlaufendes Zahnmittel (2) mit einer Zahnhöhe h und jeweils wenigstens einer Zahnspitze auf, die im verpressten Zustand in das Rohrende (6) einschneidet, wobei die Zahnspitze im unverpressten Zustand einen Querschnitt freigibt, dessen Durchmesser in etwa dem Grundinnendurchmesser d entspricht;
- axial an die Flanken wenigstens eines Zahnmittels (2) schließt sich jeweils ein dem Rohrende zugewandter erster (17a) bzw. ein dem Rohrende abgewandter zweiter (17b) Teilabschnitt einer Aufbauchung (17) an, wobei der Innenradius des Stützkörpers (1) zu beiden Seiten des Zahnmittels (2) zunächst jeweils näherungsweise um die Zahnhöhe *h* steigt und mit zunehmender axialer Entfernung von der Zahnspitze über eine vorgegebene Länge *l*₁ bzw. *l*₂ bis näherungsweise linear oder gekrümmt auf den dem Grundinnendurchmesser entsprechenden Radius *d*/*2* zurückgeht, wobei im Bereich der beiden Teilabschnitte (17a, b) der Aufbauchung und an den jeweiligen Enden der Teilabschnitte der Aufbauchung kein weiteres Zahnmittel vorgesehen ist,
- wobei das Verhältnis zwischen der Zahnhöhe *h* und den Längen *l*₁ bzw. *l*₂ jeweils so gewählt ist, dass für ein gedachtes Dreieck, das die Aufbauchung mit der Mittenachse bildet, die von den Schenkeln dieses Dreiecks mit der Mittenachse der Rohrpresskupplung gebildeten Winkel α_{1 bzw. 2} = tan⁻¹ (*h* / *l*_{*1* bzw. 2}) jeweils im Bereich von etwa 1 bis 15° liegen,
- wobei mindestens zwei Aufbauchungen vorhanden sind, und
- wobei wenigstens ein sich an die Aufbauchungen (3) anschließender zylindrischer Zwischenbereich (14) vorgesehen ist, dessen Durchmesser jeweils in etwa dem Grundinnendurchmesser *d* entspricht, wobei die axiale Länge des Zwischenbereiches (14) zwischen zwei aufeinander folgenden Aufbauchungen (3) vorzugsweise mindestens dem Doppelten der Gesamtlänge der Aufbauchungen (*l₁* + *l₂*) entspricht.

7. Stützkörper nach mindestens einem der Ansprüche 1 bis 6,
**dadurch gekennzeichnet, dass**
die Innenwand des Stützkörpers (1) Bereiche (8) mit einer verdrehsichernden Struktur aufweist, durch die eine Relativbewegung zwischen Rohrende (6) und Stützkörper (1) im Verpressungszustand blockiert wird, wobei die verdrehsichernde Struktur vorzugsweise in einem axialen Bereich (22) zwischen dem rohrseitigen Stirnende des Stützkörpers und der ersten Aufbauchung vorgesehen ist, und wobei die verdrehsichernde Struktur vorzugsweise durch eine Aufrauhung oder Rändelung der Oberfläche der Innenwand des Stützkörpers (1) und/oder durch wenigstens eine in axialer Richtung über einen Teilabschnitt der Innenwand des Stützkörpers verlaufende Sicke gebildet ist.

8. Stützkörper nach mindestens einem der Ansprüche 1 bis 7,
**dadurch gekennzeichnet, dass**
das bei der Aufbauchung (3, 17) nach außen überstehende Volumen dem an der Innenseite der Aufbauchung ohne Berücksichtigung der Zahnmittel (2) fehlenden Volumen entspricht.

9. Stützkörper nach mindestens einem der Ansprüche 1 bis 8,
**dadurch gekennzeichnet, dass**
das wenigstens eine Zahnmittel (2) im Querschnitt symmetrisch, vorzugsweise dreieckig ausgebildet ist.

10. Stützkörper nach mindestens einem der Ansprüche 1 bis 9,
**dadurch gekennzeichnet, dass**
der Stützkörper (1) an seiner Innenwand einen Anschlag als Einschubbegrenzung für ein Rohrende (6) aufweist, welcher vorzugsweise durch ein separates, im Inneren des Stützkörpers (1) fixiertes Anschlagrohr (9) gebildet wird.

11. Stützkörper nach mindestens einem der Ansprüche 1 bis 10,
**dadurch gekennzeichnet, dass**
der Stützkörper (1) an seiner Außenseite einen Vorsprung (4) für den Hintergriff eines Presswerkzeuges aufweist, welcher vorzugsweise als ein in eine Nut (7) an der Außenseite des Stützkörpers (1) eingreifender Ring (4) ausgebildet ist.

12. Rohrpresskupplung mit einem Stützkörper nach mindestens einem der Ansprüche 1 bis 11,
**dadurch gekennzeichnet, dass**
diese eine über den Stützkörper (1) zu schiebende Presshülse (5) aufweist, deren Innendurchmesser kleiner als der Außendurchmesser der Aufbauchung (3) ist, und welche vorzugsweise einen Bereich (15) mit einem ersten Querschnitt und einen im Verschiebeweg dahinter liegenden zweiten Bereich (10) mit einem zweiten, geringeren Querschnitt aufweist.

13. Rohrpresskupplung nach Anspruch 12,
**dadurch gekennzeichnet, dass**
der Stützkörper (1) im montierten Zustand über die Presshülse (5) übersteht, wobei sich der überstehende Bereich des Stützkörpers im Verpressungszustand derart nach außen wölbt, dass ein Heruntergleiten der Presshülse (5) von dem Stützkörper (1) blockiert wird.

14. Rohrpresskupplung nach Anspruch 12 oder 13,
**dadurch gekennzeichnet, dass**
der Stützkörper (1) mehrere Zahnmittel mit Aufbauchungen (3, 17) aufweist, und dass die Presshülse (5) derart ausgebildet ist, dass die Deformation der Aufbauchungen entlang des Verpressungsweges hauptsächlich nacheinander stattfindet, wobei der Verpressungsweg vorzugsweise wenigstens zwei Dritteln der Länge der Presshülse (5) entspricht.

15. Verfahren zur Herstellung eines Stützkörpers für eine Rohrpresskupplung, **gekennzeichnet durch** die Schritte:
a) Drehen eines Stützkörpers (1) mit mindestens einer Profilierung gemäß mindestens einem der Patentansprüche 1 bis 11 sowie mit einer Verengung des Innendurchmessers;
b) Montieren eines in eine Nut (7) an der Außenseite des Stützkörpers (1) eingreifenden Ringes (4) als Hintergriff für das Verpressungswerkzeug;
und/oder
c) Presspassung einer in den Stützkörper (1) eingeführten Anschlaghülse (9) in der Verengung.

## Claims

1. A support body for a compression pipe joint for connecting a pipe end (6) to the support body (1) which can be pushed onto the pipe end and which surrounds same on the outside and which has a profiling, wherein in the unpressed condition the support body in the axial region provided for pushing on the pipe end (6) has at least one base inside diameter *d* which approximately corresponds to the outside diameter of the pipe end plus tolerances and wherein to produce the connection pressing forces can be applied to the outside of the support body (1), which lead to constriction of the support body (1), wherein the inside profiling of the support body (1) in the unpressed condition is of the following configuration:
- at its inside the support body (1) has at least one peripherally extending tooth means (2) of a tooth height *h* and at least one respective tooth tip which in the pressed condition cuts into the pipe end (6), wherein the tooth tip in the unpressed condition liberates a cross-section whose diameter approximately corresponds to the base inside diameter *d*;
- axially adjoining the flanks of at least one tooth means (2) is a respective first portion (17a) towards the pipe end and a second portion (17b) remote from the pipe end of an outward bulge portion (17), wherein the inside radius of the support body (1) at both sides of the tooth means (2) initially respectively increases approximately by the tooth height *h* and with increasing axial distance from the tooth tip returns over a predetermined length *l₁* and *l₂* respectively linearly or curvedly to approximately the radius *d*/*2* corresponding to the base inside diameter, wherein no further tooth means is provided in the region of the two portions (17a, b) of the outward bulge portion and at the respective ends of the portions of the outward bulge portion,
- wherein the relationship between the tooth height *h* and the lengths *l₁* and *l₂* is respectively so selected that for a notional triangle which forms the outward bulge portion with the centre axis the angles α_{1 and 2} formed by the limbs of said triangle with the centre axis of the compression pipe joint = tan⁻¹ *(h*/*l_{1 and 2})* are respectively in a range of about 1° to 15°,
- wherein if there are provided a plurality of tooth means with associated outward bulge portions (17) the shape of the outward bulge portions (17) corresponds to a notional triangle of the height *h*, wherein the tooth means (2) extends from the tip of the notional triangle to the outside of the pipe end (6) and wherein the outward bulge portions go directly into each other so that in the axial direction there is a triangular wave-shape profile with tooth means (2) which are arranged therein, wherein the at least one point (18) at which the outward bulge portions (17) meet is deformed hinge-like in the pressing operation.

2. A support body according to claim 1 **characterised in that** said angles are approximately in the range of 4° to 6° for pressing high-quality steel pipes, approximately in the range of 3° to 10° for pressing copper pipes and in the range of 1° to 15° for pressing plastic pipes.

3. A support body according to claim 1 or claim 2 **characterised in that** the tooth height *h*, the lengths *l₁* and *l₂* and the geometry of the outward bulge portion (17) for each tooth means (2) are respectively so selected that the tooth tip in the pressed condition cuts into the outside wall of the pipe end (6) and seals same off without non-elastically deforming the pipe end to any degree worth mentioning and the inside of the support body (1) in the region of the outward bulge portion (17) bears over as large an area as possible against the outside wall of the pipe end (6).

4. A support body according to one of claims 1 to 3 **characterised in that** in the axial regions beside or between the tooth means or the plurality of tooth means (2) the support body (1) has entirely or in partial regions thereof a substantially constant wall thickness so that the outside profiling of the support body substantially corresponds to the inside profiling - apart from the tooth means (2) which are provided on the inside.

5. A support body according to at least one of claims 1 to 4 **characterised in that** the shape of the at least one outward bulge portion (17) corresponds to the limbs of an isosceles triangle with *l₁* = *l₂*, wherein the tooth means (2) extends from the tip of the notional isosceles triangle to the outside of the pipe end (6).

6. A support body (1) for a compression pipe joint for connecting a pipe end (6) to the support body (1) which can be pushed onto the pipe end and which surrounds same on the outside and which has a profiling, wherein in the unpressed condition the support body in the axial region provided for pushing on the pipe end (6) has at least one base inside diameter *d* which approximately corresponds to the outside diameter of the pipe end plus tolerances and wherein to produce the connection pressing forces can be applied to the outside of the support body (1), which lead to constriction of the support body (1), wherein the inside profiling of the support body (1) in the unpressed condition is of the following configuration:
- at its inside the support body (1) has at least one peripherally extending tooth means (2) of a tooth height *h* and at least one respective tooth tip which in the pressed condition cuts into the pipe end (6), wherein the tooth tip in the unpressed condition liberates a cross-section whose diameter approximately corresponds to the base inside diameter *d*;
- axially adjoining the flanks of at least one tooth means (2) is a respective first portion (17a) towards the pipe end and a second portion (17b) remote from the pipe end of an outward bulge portion (17), wherein the inside radius of the support body (1) at both sides of the tooth means (2) initially respectively increases approximately by the tooth height *h* and with increasing axial distance from the tooth tip returns over a predetermined length *l₁* and *l₂* respectively linearly or curvedly to approximately the radius *d*/*2* corresponding to the base inside diameter, wherein no further tooth means is provided in the region of the two portions (17a, b) of the outward bulge portion and at the respective ends of the portions of the outward bulge portion,
- wherein the relationship between the tooth height *h* and the lengths *l₁* and *l₂* is respectively so selected that for a notional triangle which forms the outward bulge portion with the centre axis the angles α_{1 and 2} formed by the limbs of said triangle with the centre axis of the compression pipe joint = tan⁻¹ *(h*/*l_{1 and2})* are respectively in a range of about 1° to 15°,
- wherein there are at least two outward bulge portions, and
- wherein there is provided at least one cylindrical intermediate region (14) which adjoins the outward bulge portions (3) and whose diameter respectively approximately corresponds to the base inside diameter *d*, wherein the axial length of the intermediate region (14) between two successive outward bulge portions (3) preferably corresponds at least to double the total length of the outward bulge portions (*l₁ + l₂).*

7. A support body according to at least one of claims 1 to 6 **characterised in that** the inside wall of the support body (1) has regions (8) with a rotation-preventing structure by which a relative movement between the pipe end (6) and the support body (1) in the pressed condition is blocked, wherein the rotation-preventing structure is preferably provided in an axial region (22) between the pipe end of the support body and the first outward bulge portion and wherein the rotation-preventing structure is preferably formed by roughening or knurling of the surface of the inside wall of the support body (1) and/or by at least one bead extending in the axial direction over a part of the inside wall of the support body.

8. A support body according to at least one of claims 1 to 7 **characterised in that** the volume projecting outwardly at the outward bulge portion (3, 17) corresponds to the volume missing at the inside of the outward bulge portion without taking the tooth means (2) into account.

9. A support body according to at least one of claims 1 to 8 **characterised in that** the at least one tooth means (2) is symmetrical in cross-section and is preferably triangular.

10. A support body according to at least one of claims 1 to 9 **characterised in that** at its inside wall the support body (1) has an abutment as a means for limiting the insertion movement for a pipe end (6), which is preferably formed by a separate abutment pipe (9) fixed in the interior of the support body (1).

11. A support body according to at least one of claims 1 to 10 **characterised in that** at its outside the support body (1) has a projection (4) for a pressing tool to engage therebehind, which is preferably in the form of a ring (4) engaging into a groove (7) at the outside of the support body (1).

12. A compression pipe joint having a support body according to at least one of claims 1 to 11 **characterised in that** it has a compression sleeve (5) which is to be pushed over the support body (1) and whose inside diameter is smaller than the outside diameter of the outward bulge portion (3) and which preferably has a region (15) having a first cross-section and a second region (10) which is disposed therebehind in the path of displacement movement and having a second smaller cross-section.

13. A compression pipe joint according to claim 12 **characterised in that** the support body (1) projects beyond the pressing sleeve (5) in the mounted condition, wherein the projecting region of the support body in the pressed condition is curved outwardly in such a way that a downward sliding movement of the pressing sleeve (5) is blocked by the support body (1).

14. A compression pipe joint according to claim 12 or 13 **characterized in that** the support body (1) has a plurality of tooth means with bulge portions (3, 17), and that the pressing sleeve (5) is formed in the way that the deformation of the bulge portions throughout the pressing path principally takes place one after the other, whereby the pressing path preferably corresponds to at least two thirds of the length of the pressing sleeve (5).

15. A method for producing a support body for a compression pipe joint, **characterised by** the steps:
a) turning of a support body (1) with at least one profiling according to at least one of claims 1 to 11 as well as with a stricture in the inner diameter;
b) mounting of a ring (4) which engages in a groove (7) in the outer face of the support body (1) as a rear grip for the compression tool;
and/or
c) press fitting of a stop sleeve (9) introduced into the support body (1) in the stricture.

## Revendications

1. Corps d'appui pour un raccord à compression pour tube ou tuyau, prévu pour connecter une extrémité de tube ou tuyau (6) au corps d'appui (1) pouvant être enfoncé par-dessus l'extrémité de tube ou tuyau et entourant celle-ci du côté extérieur, lequel corps d'appui présente un profilage, le corps d'appui, dans l'état non comprimé, présentant un diamètre intérieur de base d correspondant approximativement au diamètre extérieur de l'extrémité de tube ou tuyau en plus de tolérances, dans la région axiale prévue pour enfoncer l'extrémité de tube ou tuyau (6), et des forces de compression pouvant être appliquées sur le côté extérieur du corps d'appui (1) pour établir la connexion, lesquelles forces de compression donnent lieu à un étranglement du corps d'appui (1), le profilage du côté intérieur du corps d'appui (1) étant réalisé, dans l'état non comprimé, comme suit :
- le corps d'appui (1) présente, sur son côté intérieur, au moins un moyen de dent périphérique (2) ayant une hauteur de dent h et à chaque fois au moins une pointe de dent, qui, dans l'état comprimé, pénètre dans l'extrémité de tube ou tuyau (6), la pointe de dent, dans l'état non comprimé, libérant une section transversale dont le diamètre correspond approximativement au diamètre intérieur de base *d* ;
- aux flancs d'au moins un moyen de dent (2) se raccorde axialement à chaque fois une première (17a) portion partielle tournée vers l'extrémité de tube ou tuyau, respectivement une deuxième (17b) portion partielle opposée à l'extrémité de tube ou tuyau, d'un renflement (17), le rayon intérieur du corps d'appui (1) des deux côtés du moyen de dent (2) augmentant d'abord à chaque fois approximativement de la hauteur de dent *h*, et avec un écartement axial croissant de la pointe de dent, revenant sur une longueur prédéfinie *l₁*, respectivement *l₂*, linéairement ou de manière courbe approximativement jusqu'au rayon *d*/*2* correspondant au diamètre intérieur de base, aucun moyen de dent supplémentaire n'étant prévu dans la région des deux portions partielles (17a,b) du renflement et aux extrémités respectives des portions partielles du renflement,
- le rapport entre la hauteur de dent *h* et les longueurs *l₁*, respectivement *l₂* étant choisi dans chaque cas de telle sorte que pour un triangle imaginaire, qui forme le renflement avec l'axe médian, les angles α_{1 resp. 2} = tan⁻¹ *(h*/*l*_{*1 resp*. *2*}) formés par les côtés de ce triangle avec l'axe médian du raccord à compression pour tube ou tuyau soient à chaque fois situés dans une plage d'environ 1° à 15°,
- et, dans la mesure où plusieurs moyens de dent sont prévus avec des renflements associés (17), la forme des renflements (17) correspondant à un triangle imaginaire de hauteur h, le moyen de dent (2) s'étendant depuis la pointe du triangle imaginaire jusqu'au côté extérieur de l'extrémité de tube ou tuyau (6), et les renflements se prolongeant directement l'un dans l'autre, de sorte qu'un profilé en forme d'ondulation triangulaire avec des moyens de dent (2) disposés à l'intérieur soit obtenu dans la direction axiale, l'au moins un point (18) au niveau duquel les renflements (17) butent l'un contre l'autre, se déformant à la manière d'une articulation lors de l'opération de compression.

2. Corps d'appui selon la revendication 1,
**caractérisé en ce que**
ces angles sont compris approximativement dans une plage de 4° à 6° pour la compression de tubes ou tuyaux en acier spécial, approximativement dans une plage de 3° à 10° pour la compression de tubes ou tuyaux en cuivre, et dans une plage de 1° à 15° pour la compression de tubes ou tuyaux en plastique.

3. Corps d'appui selon la revendication 1 ou 2,
**caractérisé en ce que**
la hauteur de dent *h*, les longueurs *l₁*, et *l₂*, et la géométrie du renflement (17) pour chaque moyen de dent (2) sont choisies à chaque fois de telle sorte que la pointe de dent dans l'état comprimé pénètre dans la paroi extérieure de l'extrémité de tube ou tuyau (6) et l'étanchéifie, sans que l'extrémité de tube ou tuyau ne soit déformée non élastiquement de manière notable, et **en ce que** le côté intérieur du corps d'appui (1) s'applique aussi complètement que possible contre la paroi extérieure de l'extrémité de tube ou tuyau (6) dans la région du renflement (17).

4. Corps d'appui selon l'une quelconque des revendications 1 à 3,
**caractérisé en ce que**
le corps d'appui (1) dans les régions axiales à côté de, ou entre, le moyen de dent ou les moyens de dent (2), présente une épaisseur de paroi essentiellement constante dans sa totalité ou dans des régions partielles, de sorte que le profilage du corps d'appui du côté extérieur corresponde essentiellement au profilage du côté intérieur - à l'exception des moyens de dent (2) prévus du côté intérieur.

5. Corps d'appui selon au moins l'une quelconque des revendications 1 à 4,
**caractérisé en ce que**
la forme de l'au moins un renflement (17) correspond aux côtés d'un triangle isocèle avec *l₁* = *l₂*, le moyen de dent (2) s'étendant depuis la pointe du triangle isocèle imaginaire jusqu'au côté extérieur de l'extrémité de tube ou tuyau (6).

6. Corps d'appui (1) pour un raccord à compression pour tube ou tuyau, prévu pour connecter une extrémité de tube ou tuyau (6) au corps d'appui (1) pouvant être enfoncé par-dessus l'extrémité de tube ou tuyau et entourant celle-ci du côté extérieur, lequel corps d'appui présente un profilage, le corps d'appui, dans l'état non comprimé, présentant un diamètre intérieur de base d correspondant approximativement au diamètre extérieur de l'extrémité de tube ou tuyau en plus de tolérances, dans la région axiale prévue pour enfoncer l'extrémité de tube ou tuyau (6), et des forces de compression pouvant être appliquées sur le côté extérieur du corps d'appui (1) pour établir la connexion, lesquelles forces de compression donnent lieu à un étranglement du corps d'appui (1), le profilage du côté intérieur du corps d'appui (1) étant réalisé, dans l'état non comprimé, comme suit :
- le corps d'appui (1) présente, sur son côté intérieur, au moins un moyen de dent périphérique (2) ayant une hauteur de dent *h* et à chaque fois au moins une pointe de dent, qui, dans l'état comprimé, pénètre dans l'extrémité de tube ou tuyau (6), la pointe de dent, dans l'état non comprimé, libérant une section transversale dont le diamètre correspond approximativement au diamètre intérieur de base *d* ;
- aux flancs d'au moins un moyen de dent (2) se raccorde axialement à chaque fois une première (17a) portion partielle tournée vers l'extrémité de tube ou tuyau, respectivement une deuxième (17b) portion partielle opposée à l'extrémité de tube ou tuyau, d'un renflement (17), le rayon intérieur du corps d'appui (1) des deux côtés du moyen de dent (2) augmentant d'abord à chaque fois approximativement de la hauteur de dent *h*, et avec un écartement axial croissant de la pointe de dent, revenant sur une longueur prédéfinie *l₁*, respectivement *l₂*, linéairement ou de manière courbe approximativement jusqu'au rayon *d*/*2* correspondant au diamètre intérieur de base, aucun moyen de dent supplémentaire n'étant prévu dans la région des deux portions partielles (17a,b) du renflement et aux extrémités respectives des portions partielles du renflement,
- le rapport entre la hauteur de dent *h* et les longueurs *l₁*, respectivement *l₂* étant choisi dans chaque cas de telle sorte que pour un triangle imaginaire, qui forme le renflement avec l'axe médian, les angles α_{1 resp. 2} = tan⁻¹ *(h*/*l_{1 resp. 2}*) formés par les côtés de ce triangle avec l'axe médian du raccord à compression pour tube ou tuyau soient à chaque fois situés dans une plage d'environ 1° à 15°,
- au moins deux renflements étant prévus, et
- au moins une région intermédiaire cylindrique (14) se raccordant aux renflements (3) étant prévue, dont le diamètre correspond approximativement à chaque fois au diamètre intérieur de base *d*, la longueur axiale de la région intermédiaire (14) entre deux renflements successifs (3) correspondant de préférence au moins au double de la longueur totale des renflements (*l₁* + *l₂*).

7. Corps d'appui selon au moins l'une quelconque des revendications 1 à 6,
**caractérisé en ce que**
la paroi intérieure du corps d'appui (1) présente des régions (8) avec une structure de fixation en rotation, qui permet de bloquer un mouvement relatif entre l'extrémité de tube ou tuyau (6) et le corps d'appui (1) dans l'état de compression, la structure de fixation en rotation étant de préférence prévue dans une région axiale (22) entre l'extrémité frontale du côté du tube ou tuyau du corps d'appui et le premier renflement, et la structure de fixation en rotation étant de préférence formée par une rugosité ou un moletage de la surface de la paroi intérieure du corps d'appui (1) et/ou par au moins une moulure s'étendant dans la direction axiale sur une portion partielle de la paroi intérieure du corps d'appui.

8. Corps d'appui selon au moins l'une quelconque des revendications 1 à 7,
**caractérisé en ce que**
le volume dépassant vers l'extérieur dans le cas du renflement (3, 17) correspond au volume manquant au niveau du côté intérieur du renflement si l'on ne tient pas compte du moyen de dent (2).

9. Corps d'appui selon au moins l'une quelconque des revendications 1 à 8,
**caractérisé en ce**
**qu'**au moins un moyen de dent (2) est réalisé symétriquement en section transversale, de préférence sous forme triangulaire.

10. Corps d'appui selon au moins l'une quelconque des revendications 1 à 9,
**caractérisé en ce que**
le corps d'appui (1) présente, sur sa paroi intérieure, une butée servant de limitation d'enfoncement pour une extrémité de tube ou tuyau (6), laquelle limitation est de préférence formée par un tube ou tuyau de butée séparé (9), fixé à l'intérieur du corps d'appui (1).

11. Corps d'appui selon au moins l'une quelconque des revendications 1 à 10,
**caractérisé en ce que**
le corps d'appui (1) présente, sur son côté extérieur, une saillie (4) pour l'engagement par l'arrière avec un outil de compression, lequel est de préférence réalisé sous forme d'une bague (4) s'engageant dans une rainure (7) sur le côté extérieur du corps d'appui (1).

12. Raccord à compression pour tube ou tuyau comprenant un corps d'appui selon au moins l'une quelconque des revendications 1 à 11,
**caractérisé en ce que**
celui-ci présente une douille de compression (5) devant être poussée par-dessus le corps d'appui (1), dont le diamètre intérieur est inférieur au diamètre extérieur du renflement (3), et qui présente de préférence une région (15) avec une première section transversale et une deuxième région (10) avec une deuxième section transversale plus petite, située derrière la première région dans le sens de déplacement.

13. Raccord à compression pour tube ou tuyau selon la revendication 12,
**caractérisé en ce que**
le corps d'appui (1), dans l'état monté, dépasse de la douille de compression (5), la région du corps d'appui qui dépasse étant courbée vers l'extérieur dans l'état comprimé de telle sorte qu'un glissement vers le bas de la douille de compression (5) soit bloqué par le corps d'appui (1).

14. Raccord à compression pour tube ou tuyau selon la revendication 12 ou 13,
**caractérisé en ce que**
le corps d'appui (1) présente plusieurs moyens de dent avec des renflements (3, 17), et **en ce que** la douille de compression (5) est réalisée de telle sorte que les déformations des renflements le long de la course de compression se produisent principalement les unes après les autres, la course de compression correspondant de préférence au moins à deux tiers de la longueur de la douille de compression (5).

15. Procédé de fabrication d'un corps d'appui pour un raccord à compression pour tube ou tuyau, **caractérisé par** les étapes consistant à :
a) tourner un corps d'appui (1) avec au moins un profilage selon au moins l'une quelconque des revendications 1 à 11 ainsi qu'avec un rétrécissement du diamètre intérieur ;
b) monter une bague (4) s'engageant dans une rainure (7) sur le côté extérieur du corps d'appui (1) en tant qu'engagement par l'arrière pour l'outil de compression ;
et/on
c) ajuster par compression une douille de butée (9) introduite dans le corps d'appui (1) dans le rétrécissement.
